# EUROPÄISCHE PATENTSCHRIFT

(11) **EP 0 504 599 B1**
(45) Veröffentlichungstag und Bekanntmachung des Hinweises auf die Patenterteilung: **29.03.1995**
(21) Anmeldenummer: 92102643.1
(22) Anmeldetag: 18.02.1992
(51) Int. Cl.: C09C 1/00, C04B 35/48, C04B 35/26

(54) **Einschlusspigmente aus Zirkoniumsilikat mit Spinelleinschlüssen, deren Herstellung und Verwendung**
Zirconium silicate occlusion pigments with spinel occlusions, their preparation and their use
Pigments d'occlusion de silicate de zirconium à occlusions de spinelle, préparation et utilisation

(30) Priorität: 16.03.1991 DE 4108623
(43) Veröffentlichungstag der Anmeldung: 23.09.1992
(73) Patentinhaber: Degussa Aktiengesellschaft, 60311 Frankfurt (DE)
(72) Erfinder: Speer, Dietrich, Dr., W-6450 Hanau 9 (DE); Kiss, Akos, Dr., W-6450 Hanau 9 (DE); Kleinschmit, Peter, Prof., W-6450 Hanau 9 (DE); Zell, Christel, W-6458 Rodenbach (DE)

(56) Entgegenhaltungen:
- EP-A- 0 074 779
- EP-A- 0 455 933
- CHEMIKER ZEITUNG, Nr. 7/8, 1977, HEIDELBERG, DE, 101. JAHRGANG, Seiten 319-323; A. BROLL ET AL.
- SPRECHSAAL, Bd. 115, Nr. 1, 1982, COBURG, DE, Seiten 43-46; B. CAMARA ET AL.
- SILIKATTECHNIK, Bd. 37, Nr. 10, 1986, BERLIN, DE, Seiten 350-352; J. ROTSCHE

## Beschreibung

Die Erfindung betrifft Einschlußpigmente auf der Basis von Zirkoniumsilikat als Hüllsubstanz und kobaltfreien Spinellen als diskret eingeschlossener farbiger Verbindung sowie ein Verfahren zu deren Herstellung und Verwendung.

Farbkörper vom Spinelltyp, wie beispielsweise CoA1₂0₄, CuCr₂0₄, ZnFe₂0₄, werden aufgrund ihrer häufig brillanten Farben schon lange zur Kolorierung von Glasuren sowie als Bestandteil von Dekorfarben verwendet. Obgleich einige Farbpigmente vom Spinelltypus gegenüber aggressiven Glasflüssen hinsichtlich ihrer Farbe weitgehend stabil sind, kommt es bei anderen Spinellen, insbesondere eisenhaltigen Spinellen, bei der Anwendung in Glasuren zu unerwünschten Farbumschlägen. Nachteilig bei den meisten Spinellen ist auch der sogenannte Ausblutungseffekt. Durch die Wechselwirkung des Pigments mit dem Glasfluß wird das Pigment mehr oder weniger stark angelöst, d. h. Bestandteile des Pigments wandern in den ihn umgebenden Glasfluß und färben diesen gegebenenfalls. Dieses "Ausbluten" verhindert die Herstellung konturenscharfer Dekore.

Um die Stabilität von Farbpigmenten während des Einbrennens keramischer Dekore zu erhöhen, wurden einige Farbkörper in durchsichtige Kristalle von glasurstabilen Substanzen eingeschlossen - siehe DE-AS 23 12 535. Als Hüllsubstanz hat sich Zirkoniumsilikat, das die farbgebenden Teilchen einschließt, bewährt. Die Zirkoniumsilikatbildung und der Einschluß der färbenden Teilchen erfolgen dabei in einer Festkörperreaktion bei 750 - 1400 _{°} C aus einer Quelle für Siliziumdioxid und einer Quelle für Zirkoniumdioxid, meist direkt aus Si0₂ und Zr0₂, in Gegenwart von Mineralisatoren. Mit dem in der DE-AS 23 12 535 beschriebenen Verfahren können keineswegs alle denkbaren farbigen Verbindungen während des Bildungsprozesses der Zirkoniumsilikathülle von dieser in für Pigmentzwecke ausreichender Menge eingeschlossen werden. Die farbgebenden Komponenten oder deren Ausgangsverbindungen können nämlich in vielen Fällen die Bildung von ZrSi0₄ aus Si0₂ und Zr0₂ verzögern oder verhindern, oder die farbigen Verbindungen werden gar nicht umhüllt und damit die angestrebten Pigmenteigenschaften nicht erreicht.

In der DE-AS 23 12 535 wird auch auf einen Versuch hingewiesen, wonach aus Si0₂, Zr0₂ und Thenardsblau, ein Spinell der Formel CoA1₂0₄, ein hellblaues Einschlußpigment erhalten wurde. Es hat sich nun herausgestellt, daß sich kobalthaltige Spinelle der Formel CoA1₂0₄, CoFe₂0₄ und CoCr₂0₄ in üblicher Pigmentqualität weder als solche noch durch in-situ-Bildung der Spinelle aus CoO und A1₂0₃, Fe₂0₃ bzw. Cr₂0₃ bei der Herstellung der Einschlußpigmente, wenn überhaupt, so nur mit einer sehr niedrigen Einschlußrate, in eine Zirkoniumsilikathülle einschließen lassen. Sei der Anwendung der erhaltenen Pigmente in Dekorfarben zeigen sich jeweils deutliche Verlaufspuren und Ausblutungen, wenn das Dekor im Schrägbrand eingebrannt wird. Die Ausblutungen sind auf die Freisetzung von Cobalt in die Glasur zurückzuführen.

Es besteht ein besonderes Interesse, die Palette an Pigmenten auf der Basis von Zirkoniumsilikat - vgl. Chemiker Zeitung 101 (1977), S. 319-323, DE-OS 37 19 051, DE-OS 39 06 818, DE-OS 39 06 819. DE-OS 39 06 821 - zu erweitern. Von solchen Pigmenten wird erwartet, daß darin enthaltene toxische Schwermetalle nicht aus dem ZrSi0₄-Kristall austreten können sowie Ausblutungserscheinungen und Farbveränderungen während eines Glasurbrandes vermindert oder vermieden werden. Eine Beschränkung auf Zirkoniumsilikat als Hüllkomponente hätte zudem den Vorteil, in Dekorationsverfahren, etwa mittels Siebdruck, mit einem einzigen Anpastmedium für alle Pigmente arbeiten zu können. Da die Palette an schwarzen, grauen und braunen Farbtönen noch begrenzt ist, war es Aufgabe der Erfindung, solche Pigmente auf der Basis von Zirkoniumsilikat-Einschlußpigmenten zu schaffen. Zudem sollten die Einschlußpigmente in hoher Farbintensität zugänglich und im wesentlichen frei von nicht oder unvollständig umhüllter farbgebender Verbindung sein. Eine weitere Aufgabe richtet sich auf die Herstellung der Pigmente, wobei sich Maßnahmen zu Abtrennung nicht umhüllter farbgebender Verbindung erübrigen sollten.

Gefunden wurden Einschlußpigmente auf der Basis von Zirkoniumsilikat als Hüllsubstanz und Spinellen als diskret eingeschlossener farbiger Verbindung, welche dadurch gekennzeichnet sind, daß die eingeschlossenen Spinelle kobaltfrei sind.

Die eingeschlossenen Spinelle besitzen die allgemeine Formel AB₂0₄, worin A ein zweiwertiges und B ein dreiwertiges Metallion darstellt oder umgekehrt. Zweiwertige Metallionen sind insbesondere Ni, Zn, Mg, Mn und Fe, dreiwertige Metallionen insbesondere Al, Cr, Fe und Mn. Die erfindungsgemäßen Einschlußpigmente sind schwarz, grau und braun und weisen die geforderte Farbstabilität und Ausblutungsresistenz auf. Bevorzugte Pigmente enthalten aluminiumfreie Spinelle, besonders bevorzugte Pigmente eisenhaltige Spinelle, wie ZnFe₂0₄, NiFe₂0₄ und Fe(Fe,Cr)₂0₄.

Die Einschlußpigmente auf der Basis von Zirkoniumsilikat als Hüllsubstanz und Spinellen als diskret eingeschlossener Verbindung lassen sich dadurch herstellen, daß man ein Gemisch aus einer Quelle für Zirkoniumdioxid, wie Zr0₂, Zirkonyloxidhydrate und einer Quelle für Siliziumdioxid, wie Si0₂, Si0₂-reiche Zeolithe, Alkoxysilane oder -siloxane in ZrSi0₄ bildendem Molverhältnis, Rohstoffen der einzuschließenden farbigen Verbindung und üblichen Mineralisatoren bei 800 bis 1300 _{°} C innerhalb von 0,5 bis 8 Stunden glüht und nach Bedarf das geglühte Produkt aufmahlt. Das Glühen kann unter reduzierenden, vorzugsweise aber meist oxidierenden, Bedingungen erfolgen. Als Rohstoffe für die einzuschließende farbige Verbindung werden kobaltfreie Oxide oder Vorstufen der Oxide, wie z. B. Hydroxide oder Carbonate, in spinellbildender Zusammensetzung eingesetzt. Gemäß einer bevorzugten Ausführungsform weisen die spinellbildenden Oxide einen mittleren Korndurchmesser (Dso-Wert, bestimmt mittels Laserbeugung) von weniger als 2 um auf. Das zu glühende Gemisch enthält vorzugsweise 10 bis 20 Gew.-% an spinellbildenden Oxiden. Als Rohstoffe für ZrSi0₄ werden Zr0₂ und Si0₂ bevorzugt. Bevorzugt werden Zr0₂ und Si0₂ mit einem mittleren Korndurchmesser im Bereich von 1 bis 10 um eingesetzt. Als Mineralisatoren sind Halogenide, insbesondere Fluoride und Chloride, der Alkali- und/oder Erdalkalimetalle sowie Alkalisilikofluoride gut geeignet. Nach dem Glühprozeß werden das Glühprodukt in üblicher Weise aufgemahlen und, soweit erwünscht, durch eine Naßbehandlung von den Mineralisatoren befreit.

Die erfindungsgemäßen spinellhaltigen Einschlußpigmente weisen im allgemeinen Dso-Werte im Bereich von großer 2 bis 20 um, insbesondere 8 bis 15 um auf. Sie eignen sich zur Einfärbung von Glasuren, Emaillen, Dekorfarben sowie zur Herstellung konturenscharfer keramischer Dekore, welche beim Einbrennen zu keiner Farbveränderung führen und nicht ausbluten. Die erfindungsgemäßen Einschlußpigmente lassen sich auch in anderen Substraten, etwa Kunststoffen, Lacken und Druckfarben, einsetzen.

Bevorzugte Einschlußpigmente sind durch ein enges Kornspektrum gekennzeichnet, wobei jeweils weniger als 5 % kleiner als 3 um und größer 20 um sind.

Die erfindungsgemäßen Einschlußpigmente zeichnen sich durch ihre Glasur- und Farbbeständigkeit unter üblichen Dekorbrandbedingungen, ihre Ausblutungsresistenz und Umweltfreundlichkeit aus.

Im Hinblick auf die völlig unbefriedigende Herstellmöglichkeit von ZrSi0₄-Einschlußpigmenten mit Einschlüssen aus kobalthaltigen Spinellen war nicht vorhersehbar, daß andere Spinelle, insbesondere eisenhaltige Spinelle, sicher in einer Zirkonsilikathülle eingeschlossen werden können, wenn der Spinell aus geeigneten Rohstoffen in-situ während der Bildung des Einschlußpigments erst gebildet wird.

Überraschenderweise wird der überwiegende Anteil der in-situ gebildeten Spinelle umhüllt, so daß die bekannten Nachteile nicht eingeschlossener Spinelle ausbleiben; eine separate Maßnahme zur Entfernung nicht umhüllter Spinelle ist somit nicht erforderlich.

### Beispiel 1

Ein Versatz bestehend aus
51,4 g Zr02
20,0 g Si0₂
9,6 g Fe203
4,8 g ZnO
6,6 g KCI
4,8 g MgF₂
2,8 g Na2SiF6

wird 20 Minuten in einer Bloch-Rosetti-Kugelmühle gemischt. Die Glühung erfolgt bei 1100 _{°} C 2 Stunden in abgedeckten Schamotte-Tiegeln im Elektrokammerofen. Das Glühgut wird anschließend aufgemahlen. Im erhaltenen beigebraunen Pigment ist der farbgebende eingeschlossene Spinell ZnFe₂0₄ röntgendiffraktometrisch nachweisbar.

Ein Dekor mit dem vorstehend hergestellten Einschlußpigment wurde im Vergleich zu nicht-eingeschlossenem ZnFe₂0₄-Spinell mit einer Prüfglasur (40 Gew.-% PbO, 40 Gew.-% Si0₂, 7 Gew.-% A1₂0₃, 6 Gew.-% B₂0₃, 5 Gew.-% CaO, 2 Gew.-% K₂0) überglasiert und im Schrägbrand getestet. Jeweils äquivalente Mengen Pigment (bezogen auf den Spinell) wurden mit einem üblichen Anpastmedium angepastet (Gew.-Verhältnis 8:2), per Siebdruck auf einen Keramikträger übertragen, mit der Prüfglasur glasiert und dann bei 1050 _{°}C im Schrägbrand gebrannt.

Das Dekor mit dem Einschlußpigment bleibt konturenscharf und behält seine Eigenfarbe (L = 61, a = 16, b = 28, gemessen im CIE-Lab-System nach DIN 66131. Demgegenüber verläuft das Dekor mit dem nicht umhüllten Spinell fast vollständig zur Unkenntlichkeit; zudem verändert sich die Farbe von beige-braun nach schmutzig gelbbraun.

### Beispiel 2

Ein Versatz gemäß Beispiel 1, bei dem ZnO durch 4,8 g NiO ersetzt wurde, liefert ein rötlichbraunes Einschlußpigment mit röntgendiffraktometrisch nachgewiesenem NiFe₂0₄-Spinell. Die Farbwerte waren im Test gemäß Beispiel 1 L = 28, a = 11, b = 14.

Der zum Vergleich getestete nicht-eingeschlossene Spinell führt zur Freisetzung von Fe- und Ni-Ionen und zu einem Farbumschlag nach gelbolivbraun.

### Beispiel 3

Ein Versatz gemäß Beispiel 1 , bei dem das ZnO durch 4,8 g Cr₂0₃ ersetzt wurde, liefert ein schwarzes Einschlußpigment, das ausblutungsresistent ist. Bei gleicher Spinellkonzentration im Dekor weist jenes mit dem Pigment gemäß Beispiel 3 der Erfindung eine höhere Farbintensität auf als dasjenige mit dem nicht-eingeschlossenen Spinell.

## Patentansprüche (Patentansprüche für folgende(n) Vertragsstaat(en) : BE, CH, DE, FR, GB, IT, LI, NL)

1. Einschlußpigmente auf der Basis von Zirkoniumsilikat als Hüllsubstanz und Spinellen als diskret eingeschlossener farbiger Verbindung,
dadurch gekennzeichnet,
daß die eingeschlossenen Spinelle kobaltfrei sind.

2. Einschlußpigmente nach Anspruch 1,
dadurch gekennzeichnet,
daß der eingeschlossene Spinell eisenhaltig ist und vorzugsweise die Zusammensetzung ZnFe₂0₄, NiFe₂0₄ oder (Fe,Cr)3 04 aufweist.

3. Verfahren zur Herstellung von Einschlußpigmenten auf der Basis von Zirkoniumsilikat als Hüllsubstanz und Spinellen als diskret eingeschlossener farbiger Verbindung durch Glühen eines Gemisches aus einer Quelle für Zirkoniumdioxid und einer Quelle für Siliziumdioxid in ZrSi0₄ bildendem Molverhältnis. Rohstoffen der einzuschließenden farbigen Verbindung und üblichen Mineralisatoren bei 800 bis 1300 _{°} C innerhalb von 0.5 bis 8 Stunden,
dadurch gekennzeichnet,
daß man kobaltfreie feinteilige Oxide oder Vorstufen derselben in spinellbildender Zusammensetzung als Rohstoffe der einzuschließenden farbigen Verbindung einsetzt.

4. Verfahren nach Anspruch 4,
dadurch gekennzeichnet,
daß man als Quelle für Zirkoniumdioxid Zr0₂, als Quelle für Siliziumdioxid Si0₂ und als spinellbildende Rohstoffe kobaltfreie Oxide einsetzt, wobei die spinellbildenden Oxide einen mittleren Korndurchmesser von weniger als 2 um aufweisen.

5. Verwendung der Einschlußpigmente der Ansprüche 1 oder 2 zur Herstellung konturenscharfer, nicht ausblutender und brennstabiler keramischer Dekore.

## Patentansprüche (Patentansprüche für folgende(n) Vertragsstaat(en) : ES)

1. Verfahren zur Herstellung von Einschlußpigmenten auf der Basis von Zirkoniumsilikat als Hüllsubstanz und Spinellen als diskret eingeschlossener farbiger Verbindung durch Glühen eines Gemisches aus einer Quelle für Zirkoniumdioxid und einer Quelle für Siliziumdioxid in ZrSi0₄ bildendemmolverhältnis, Rohstoffen der einzuschließenden farbigen Verbindung und üblichen Mineralisatoren bei 800 bis 1300 ° C innerhalb von 0,5 bis 8 Stunden,
dadurch gekennzeichnet,
daß man kobaltfreie feinteilige Oxide oder Vorstufen derselben in spinellbildender Zusammensetzung als Rohstoffe der einzuschließenden farbigen Verbindung einsetzt.

2. Verfahren nach Anspruch 1,
dadurch gekennzeichnet,
daß man eisenhaltige Spinelle, insbesondere ZnFe₂0₄, NiFe₂0₄ oder (Fe,Cr)₃0₄ bildende Rohstoffe, einsetzt.

3. Verfahren nach Anspruch 1 oder 2,
dadurch gekennzeichnet,
daß man als Quelle für Zirkoniumdioxid Zr0₂, als Quelle für Siliziumdioxid Si0₂ und als spinellbildende Rohstoffe kobaltfreie Oxide einsetzt, wobei die spinellbildenden Oxide einen mittleren Korndurchmesser von weniger als 2 um aufweisen.

4. Verwendung der nach dem Verfahren gemäß einem der Ansprüche 1 bis 3 hergestellten Einschlußpigmente zur Herstellung konturenscharfer, nicht ausblutender und brennstabiler keramischer Dekore.

## Claims (Claims for the following Contracting State(s) : BE, CH, DE, FR, GB, IT, LI, NL)

1. Inclusion pigments based on zirconium silicate as coating material and spinels as discretely included coloured compound,
characterised in that
the included spinels are cobalt-free.

2. Inclusion pigments according to claim 1,
characterised in that
the included spinel is iron-containing and preferably has the composition ZnFe₂0₄ . NiFe₂0₄ or (Fe, Cr)₃0₄.

3. Process for the preparation of inclusion pigments based on zirconium silicate as coating material and spinels as discretely included coloured compound by calcining a mixture consisting of a source of zirconium oxide and a source of silicon dioxide in the molar ratio to form ZrSi0₄, raw materials of the coloured compound to be included and conventional mineralisers at 800 °C to 1300° C within 0.5 to 8 hours,
characterised in that
the raw materials of the coloured compound to be included used are cobalt-free fine-particled oxides or precursors thereof in a spinel-forming composition.

4. Process according to claim 3,
characterised in that
the source of zirconium oxide used is Zr0₂, the source of silicon dioxide used is Si0₂ and the spinel-forming raw materials used are cobalt-free oxides, wherein the spinel-forming oxides having an average particle diameter of less than 2 µm.

5. Use of the inclusion pigments according to claim 1 or 2 for the preparation of ceramic decorations which have sharp outlines, do not bleed through and are stable to firing.

## Claims (Claims for the following Contracting State(s) : ES)

1. Process for the preparation of inclusion pigments based on zirconium silicate as coating material and spinels as discretely included coloured compound by calcining a mixture consisting of a source of zirconium dioxide and a source of silicon dioxide in the molar ratio to form ZrSi0₄, raw materials of the coloured compound to be included and conventional mineralisers at 800 to 1300 _{°} C within 0,5 to 8 hours,
characterised in that
the raw materials of the coloured compound to be included used are cobalt-free fine-particled oxides or precursors thereof in a spinel-forming composition.

2. Process according to claim 1,
characterised in that
raw materials forming iron-containing spinels, preferably ZnFe₂0₄, NiFe₂0₄ or (Fe, Cr)₃0₄, are used.

3. Process according to claim 1 or 2,
characterised in that
the source of zirconium oxide used is Zr0₂, the source of silicon dioxide used is Si0₂ and the spinel-forming raw materials used are cobalt-free oxides, wherein the spinel-forming oxides having an average particle diameter of less than 2 µm.

4. Use of the inclusion pigments obtained in a process according to any of the claims 1 to 3 for the preparation of ceramic decorations which have sharp outlines, do not bleed through and are stable to firing.

## Revendications (Revendications pour l'(les) Etat(s) contractant(s) suivant(s) : suivants : BE, CH, DE, FR, GB, IT, LI, NL)

1. Pigments d'occlusion à base de silicate de zirconium comme substance enveloppe et spinelles comme composé coloré inclu discrètement, caractérisés en ce que les spinelles inclus sont exempts de cobalt.

2. Pigments d'occlusion selon la revendication 1, caractérisés en ce que le spinelle inclu est porteur de fer et a de préférence la composition ZnFe₂0₄, NiFe₂0₄ ou (FeCr)₃0₄.

3. Procédé de préparation de pigments d'occlusion à base de silicate de zirconium comme substance enveloppe et de spinelles comme composé coloré inclu discrètement, par calcination d'un mélange d'une source de dioxyde de zirconium et d'une source de dioxyde de silicium dans un rapport molaire formant ZrSi0₄, de matières premières du composé coloré à inclure et de minéralisateurs usuels, entre 800 et 1300_{°}C pendant 0,5 à 8 heures, caractérisé en ce qu'on met en oeuvre des oxydes finement divisés exempts de cobalt ou des progénitures de ces derniers dans une composition formant des spinelles en tant que matières premières du composé coloré à inclure.

4. Procédé selon la revendication 3 caractérisé en ce qu'on met en oeuvre comme source de dioxyde de zirconium Zr0₂, comme source de dioxyde de silicium Si0₂ et comme matières premières formant des spinelles, des oxydes exempts de cobalt, les oxydes formant des spinelles comportant un diamètre moyen de grain inférieur à 2 µm.

5. Utilisation des pigments d'occlusion des revendications 1 ou 2 pour la production de décoration de céramique à contours nets, n'émigrant pas et stables à la cuisson.

## Revendications (Revendications pour l'(les) Etat(s) contractant(s) suivant(s) : suivant : ES)

1. Procédé de préparation de pigments d'occlusion à base de silicate de zirconium comme substance enveloppe et de spinelles comme composé coloré inclu discrètement, par calcination d'un melange d'une source de dioxyde de zirconium et d'une source de dioxyde de silicium dans un rapport molaire formant ZrSi0₄, de matières premières du composé coloré à inclure et de minéralisateurs usuels, entre 800 et 1300 _{°} C pendant 0,5 à 8 heures, caractérise en ce qu'on,
met en oeuvre des oxydes finement divisès exempts de cobalt ou des progénitures de ces derniers dans une composition formant des spinelles en tant que matières premières du composé coloré à inclure.

2. Procédé selon la revendication 1,
caractérisés en ce qu'on,
met en oeuvre des matières premières formant des spinelles contenant de fer, de préférence inclu est porteur de fer et a de préférence la composition ZnFe204, NiFe204 ou (Fe, Cr)-₃0₄.

3. Procédé selon la revendications 1 ou 2,
caractérisé en ce qu'on,
met en oeuvre comme source de dioxyde de zirconium Zr0₂, comme source de dioxyde de silicium Si0₂ et comme matières premières formant des spinelles, des oxydes exempts de cobalt, les oxydes formant des spinelles comportant un diamètre moyen de grain inférieur à 2 µm.

4. Utilisation des pigments d'occlusion de revendications 1 ou 2 pour la production de décoration de céramique à contours nets, n'émigrant pas et stables à la cuisson.
